# EUROPÄISCHE PATENTSCHRIFT

(11) **EP 2 902 444 B1**
(45) Veröffentlichungstag und Bekanntmachung des Hinweises auf die Patenterteilung: **17.01.2018**
(21) Anmeldenummer: 14153391.9
(22) Anmeldetag: 31.01.2014
(51) Int. Cl.: C08L 77/02, C08L 77/06, C08K 5/00, C08K 3/00

(54) **Polyamid-Formmassen mit flammhemmenden Eigenschaften und sehr guter Langzeitwärmealterungsbeständigkeit**
Polyamide moulding compounds with flame retardant properties and very good long-term heat ageing resistance
Masses de formage en polyamide aux propriétés ignifuges et à la très bonne résistance au vieillissement thermique à long terme

(43) Veröffentlichungstag der Anmeldung: 05.08.2015
(73) Patentinhaber: EMS-PATENT AG, 7013 Domat / Ems (CH)
(72) Erfinder: Thomas, Dr. Oliver, 7013 Domat/Ems (CH); Lamberts, Nikolai, 7402 Bonaduz (CH); Hoffmann, Dr. Botho, 7013 Domat/Ems (CH); Beschiaschvili, Dr. Georgi, 7000 Chur (CH)
(74) Vertreter: Pfenning, Meinig & Partner mbB

(56) Entgegenhaltungen:
- EP-A1- 0 839 862
- EP-A1- 2 535 365
- WO-A1-2005/035664
- WO-A1-2013/163012
- WO-A1-2013/188302
- WO-A1-2013/188323
- WO-A1-2013/188488

## Beschreibung

Die vorliegende Erfindung betrifft Polyamid-Formmassen, die sich durch hervorragende flammhemmende Eigenschaften und durch eine sehr gute Langzeitwärmealterungsbeständigkeit auszeichnen. Die erfindungsgemäßen Formmassen enthalten ein teilaromatisches Polyamid, Caprolactam, einen organischen Wärmestabilisator, gegebenenfalls ein Flammschutzmittel und optional weitere Additive und Zusatzstoffe. Die Polyamid-Formmasse ist dabei frei von Metallsalzen und Metalloxiden eines Übergangsmetalls der Gruppe VB, VIB, VIIB oder VIIIB des Periodensystems.

Thermoplastische Polyamide können als Konstruktionswerkstoffe für Bauteile eingesetzt werden, die während ihrer Lebensdauer erhöhten Temperaturen ausgesetzt sind. Da es hierbei zu thermooxidativen Schädigungen kommt, werden Wärmestabilisatoren eingesetzt, die das Auftreten der thermooxidativen Schädigung hinauszögern.

Langzeitwärmestabilisierte Polyamid-Formmassen sind aus der EP 2 535 365 A1 bekannt, worin Formmassen auf Basis eines teilaromatischen Polyamids und Caprolactam gearbeitet werden, die mit Kupferstabilisatoren bzw. mit Mischungen aus Kupfer- und organischen Stabilisatoren versehen sind. Diese Formmassen weisen allerdings keine flammhemmende Wirkung auf.

Auch die WO2006/074934A1 betrifft langzeitwärmestabilisierte Formmassen. Die Langzeitwärmestabilisierung wird hier durch die Verwendung von mindestens zwei speziellen Wärmestabilisatoren (z.B. Kupferiodid und Eisenoxid) und durch Einsatz von zwei Polyamiden, die sich im Schmelzpunkt um zumindest 20 °C unterscheiden, erreicht.

Die WO2012/168442A1 beschreibt langzeitwärmestabilisierte Formmassen die neben einem teilaromatischen Polyamid auch PA 6 oder PA 66 enthalten, wobei als Wärmestabilisator Mischungen aus Kupfer-Stabilisatoren und elementarem Eisen verwendet werden.

WO-A-2005 035664 beschreibt flammgeschützte Polyamidformmassen, während WO-A-2013 163012, WO-A-2013 188488, WO-A-2013 188302 und WO-A-2013 188323 Zusammensetzung mit Polyamid beschreiben.

EP-A-0 839 862 beschreibt Polyamidharzzusammensetzung.

Ausgehend vom bisherigen Stand der Technik war es deshalb Aufgabe der vorliegenden Erfindung, eine Polyamid-Formmasse bereitzustellen, die sowohl hervorragende flammhemmende Eigenschaften als auch eine sehr gute Langzeitwärmealterungsbeständigkeit aufweist.

Diese Aufgabe wird durch die Polyamid-Formmasse gemäß Patentanspruch 1 gelöst. Die abhängigen Ansprüche stellen dabei vorteilhafte Ausführungsformen dar.

Erfindungsgemäß wird somit eine Polyamid-Formmasse bestehend aus
a) 22 bis 99,99 Gew.-% einer Polyamidmischung bestehend aus
   (A1) mindestens einem teilaromatischen, teilkristallinen Polyamid mit einem Schmelzpunkt im Bereich von 255 bis 330 °C
   (A2) mindestens einem sich vom mindestens einen teilaromatischen, teilkristallinen Polyamid (A1) unterscheidenden caprolactamhaltigen Polyamid mit einem Gehalt an Caprolactam von wenigstens 50 Gew.-%,
      wobei der Gesamtcaprolactamgehalt des im Polyamid (A1) und Polyamid (A2) enthaltenen Caprolactam, bezogen auf die Polyamidmischung, 3 bis 35 Gew.-% beträgt,
b) 0 bis 25 Gew.-% mindestens eines Flammschutzmittels,
c) 0.01 bis 3.0 Gew.-% mindestens eines organischen Wärmestabilisators, und
d) 0 bis 50 Gew.-% mindestens eines Additivs,
bereitgestellt, wobei sich die Komponenten a) bis d) auf 100 Gew.-% ergänzen. Die Polyamid-Formmasse ist dabei frei von Metallsalzen und Metalloxiden eines Übergangsmetalls der Gruppe VB, VIB, VIIB oder VIIIB des Periodensystems.

Die erfindungsgemäße Polyamid-Formmasse zeichnet sich dadurch aus, dass sie sowohl hervorragende flammhemmende Eigenschaften als auch eine sehr gute Langzeitwärmealterungsbeständigkeit aufweist. Es kann dabei vollkommen auf die Verwendung von Metallsalzen und/oder Metalloxiden eines Übergangsmetalls der Gruppe VB, VIB, VIIB oder VIIIB des Periodensystems verzichtet werden.

Erfindungsgemäß wird als Bestandteil (A1) der Polyamidmischung bzw. Polyamidmatrix A ein teilaromatisches und gleichzeitig teilkristallines Polyamid mit einem Schmelzpunkt im Bereich von 255 bis 330 °C verwendet. Der Schmelzpunkt von Polyamiden hängt dabei im Wesentlichen nur bedingt vom Molekulargewicht bzw. der intrinsischen Viskosität der Polyamide ab, sondern wird vielmehr durch die chemische Zusammensetzung durch Wahl der entsprechenden Monomere bedingt. Somit können die für die Erfindung einsetzbaren Polyamide über einen breiten Bereich variieren, vorausgesetzt, dass ihr Schmelzpunkt im zuvor genannten Bereich liegt. Die Schmelzpunkte für die jeweiligen teilaromatischen und teilkristallinen Polyamide sind tabellarisierte Standard-Parameter für die jeweiligen Polyamide, können aber auch anhand einfacher Versuche nachvollzogen werden.

Unter einem caprolactamhaltigen Polyamid ist erfindungsgemäß ein Polyamid zu verstehen, das durch Polymerisation von Caprolactam bzw. Copolymerisation/-polykondensation von Caprolactam mit weiteren Monomeren herstellbar ist. Das Caprolactam-haltige Polymer enthält somit mindestens 50 Gew.-% Wiederholungseinheiten, die von Caprolactam abgeleitet sind.

Um den gefüllten bzw. verstärkten Formmassen eine ausreichende Wärmealterungsbeständigkeit zu verleihen, wird dem teilkristallinen, teilaromatischen Polyamid ein caprolactamhaltiges Polyamid zugesetzt, so dass der Caprolactamgehalt der Polyamidmatrix 3 bis 35, bevorzugt 10 bis 28 und insbesondere bevorzugt 15 bis 25 Gew.-% beträgt. Durch eine höhere Konzentration an Caprolactam wird die Wärmealterungsbeständigkeit nicht mehr wesentlich verbessert, aber die Wärmeformbeständigkeit der Formmassen sowie die Festigkeit bei hohen Temperaturen zu stark reduziert. Unterhalb einer Caprolactamkonzentration von 3 Gew.-%, bezogen auf die Summe der Polyamide (A1) und (A2), kann die gewünschte hohe Wärmealterungsbeständigkeit nicht mehr sichergestellt werden.

Bei einer bevorzugten Polyamid-Formmasse gemäß der vorliegenden Erfindung besteht die Polyamidmischung A aus
(A1) 70-78 Gew.-% mindestens einem teilaromatischen, teilkristallinen Polyamid mit einem Schmelzpunkt im Bereich von 255 - 330°C, und
(A2) mindestens einem caprolactamhaltigen Polyamid mit einem Gehalt an Caprolactam von wenigstens 50 Gew.-%,
   wobei Komponente (A1) frei von Caprolactam und Aminocapronsäure ist, d.h. keine hiervon abgeleiteten Wiederholungseinheiten beinhaltet.

Die weiter oben genannten Parameter bzw. Gehalte an weiteren Verbindungen werden dabei beibehalten.

Die erfindungsgemäßen Polyamidformmassen enthalten 22 bis 99,99 Gew.-%, bevorzugt 30 bis 79,9 Gew.-%, insbesondere bevorzugt 35 bis 60 Gew.-%, einer Polyamidmatrix bestehend aus teilkristallinen, teilaromatischen Polyamiden mit einem Schmelzpunkt von 255 bis 330°C (A1) und von A1 verschiedenen Polyamiden auf Basis von Caprolactam (A2).

Die Polyamidkomponente (A2) besteht zu mindestens 50 Gew.-%, bevorzugt zu mindestens 60 Gew.-% und insbesondere bevorzugt zu mindesten 70 Gew.-% aus Caprolactam. Die Polyamidkomponente (A2) ist bevorzugt ein teilkristallines, aliphatisches Polyamid.

Dabei beträgt der Gesamtcaprolactamgehalt, d.h. die Summe des in Polyamid (A1) und Polyamid (A2) enthaltenen Caprolactams, insbesondere" 10 bis 30 Gew.-%, bevorzugt 12 bis 29 Gew.-% und insbesondere bevorzugt 15 bis 28 Gew.-%, bezogen auf die Polyamidmischung aus (A1) und (A2).

Bevorzugt ist die erfindungsgemäße Formmasse frei von Polyolefinen, insbesondere frei von Polyethylen-α-olefin-copolymeren.

### Komponente (A1)

Bei der Komponente (A1) handelt es sich um teilkristalline, teilaromatische Polyamide, welche bevorzugtermaßen eine Glasübergangstemperatur im Bereich von 90 bis 140°C, bevorzugt im Bereich von 110 bis 140°C und insbesondere im Bereich von 115 bis 135°C besitzen.

Der Schmelzpunkt des Polyamids (A1) liegt im Bereich von 255 bis 330°C, bevorzugt im Bereich von 270 bis 325°C und insbesondere im Bereich von 280 bis 320°C.

Bevorzugte teilaromatische teilkristalline Polyamide sind dabei aus
a) 30 bis 100 mol-%, insbesondere 50 bis 100 mol-% Terephthalsäure und/oder Naphthalindicarbonsäure sowie 0 bis 70 mol-%, insbesondere 0 bis 50 mol-% mindestens einer aliphatischen Dicarbonsäure mit 6 bis 12 Kohlenstoffatomen, und/oder 0 bis 70 mol-%, insbesondere 0 bis 50 mol-% mindestens einer cycloaliphatischen Dicarbonsäure mit 8 bis 20 Kohlenstoffatomen, und/oder 0 bis 50 mol-% Isophthalsäure, bezogen auf die Gesamtmenge der Dicarbonsäuren
b) 80 bis 100 mol-% mindestens eines aliphatischen Diamins mit 4 bis 18 Kohlenstoffatomen, vorzugsweise mit 6 bis 12 Kohlenstoffatomen sowie 0 bis 20 mol-% mindestens eines cycloaliphatischen Diamins, vorzugsweise mit 6 bis 20 Kohlenstoffatomen, und/oder 0 bis 20 mol-% mindestens eines araliphatischen Diamins, wie z.B. PACM, MACM, IP-DA, MXDA und PXDA, bezogen auf die Gesamtmenge der Diamine, sowie gegebenenfalls
c) Aminocarbonsäuren und/oder Lactamen je mit 6 bis 12 Kohlenstoffatomen,
hergestellt.

Gemäß einer bevorzugten Ausführungsform wird dabei das teilaromatische Polyamid der Komponente (A1) auf Basis von wenigstens 30 Mol-%, insbesondere von wenigstens 50 Mol-% Terephthalsäure und wenigstens 80 Mol-% aliphatischen Diaminen mit 4 bis 18 Kohlenstoffatomen, vorzugsweise mit 6-12 Kohlenstoffatomen, und gegebenenfalls weiteren aliphatischen, cycloaliphatischen und aromatischen Dicarbonsäuren sowie Lactamen und/oder Aminocarbonsäuren, gebildet. Als weitere aromatische Dicarbonsäuren können neben der Terephthalsäure Isophthalsäure und Naphthalindicarbonsäure verwendet werden. Geeignete aliphatische und cycloaliphatische Dicarbonsäuren, die neben Terephthalsäure verwendet werden können, besitzen 6 bis 36 Kohlenstoffatome und werden in einem Anteil von höchstens 70 Mol-%, insbesondere in einem Anteil von höchstens 50 Mol-%, bezogen auf die Gesamtmenge der Dicarbonsäuren, eingesetzt.

Zudem ist bevorzugt, dass die genannten aromatischen Dicarbonsäuren des teilaromatischen Polyamids der Komponente (A1) ausgewählt sind aus der Gruppe: Terephthalsäure, Isophthalsäure, sowie Mischungen davon.

Gemäß einer weiteren bevorzugten Ausführungsform sind die genannten z.B. aliphatischen Dicarbonsäuren des teilaromatischen Polyamids der Komponente (A1), die neben Terephthalsäure eingesetzt werden können, ausgewählt aus der Gruppe Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Unter den Dicarbonsäuren werden Adipinsäure, Sebazinsäure, Dodecandisäure, Isophthalsäure oder eine Mischung derartiger Dicarbonsäuren, besonders Adipinsäure und Isophthalsäure und besonders Adipinsäure alleine bevorzugt. Gemäß einer weiteren bevorzugten Ausführungsform sind die genannten aliphatischen Diamine des teilaromatischen Polyamids der Komponente (A1) ausgewählt aus der Gruppe 1,4-Butandiamin, 1,5-Pentandiamin, 1,6-Hexandiamin, 1,7-Heptandiamin, 1,8-Octandiamin, 1,9-Nonandiamin, Methyl-1,8-Octandiamin, 1,10-Decandiamin, 1,11-Undecandiamin, 1,12-Dodecandiamin, oder einer Mischung derartiger Diamine, wobei 1,6-Hexandiamin, 1,10-Decandiamin, 1,12-Dodecandiamin, oder eine Mischung derartiger Diamine bevorzugt ist, wobei 1,6-Hexandiamin und 1,10-Decandiamin besonders bevorzugt sind. Neben den aliphatischen Diaminen können in einer Konzentration von 0 bis 20 Mol-%, bezogen auf die Gesamtmenge an Diaminen, cycloaliphatische und/oder araliphatische Diamine ersetzt werden.

Besonders bevorzugt werden die hochschmelzenden Polyamide aus folgenden Komponenten gebildet:
a) (A1a) Dicarbonsäuren:
   50 - 100 Mol-% aromatische Terephthalsäure und/oder Naphthalindicarbonsäure, bezogen auf den Gesamtgehalt an anwesenden Dicarbonsäuren,
   0 - 50 Mol-% einer aliphatischen Dicarbonsäure, bevorzugt mit 6 bis 12 Kohlenstoffatomen, und/oder einer cycloaliphatischen Dicarbonsäure mit bevorzugt 8 bis 20 Kohlenstoffatomen, und/oder Isophthalsäure;
b) (A1b) Diamine:
   80 - 100 Mol-% mindestens eines aliphatischen Diamins mit 4-18 Kohlenstoffatomen, vorzugsweise mit 6 bis 12 Kohlenstoffatomen, bezogen auf den Gesamtgehalt an anwesenden Diaminen,
   0 - 20 Mol-% cycloaliphatische Diamine, vorzugsweise mit 6 bis 20 Kohlenstoffatomen, und/oder araliphatische Diamine, wie z.B. PACM, MACM, IPDA, MXDA und PXDA,
   wobei in den hochschmelzenden Polyamiden der prozentuale Molgehalt an Dicarbonsäuren 100 % und der prozentuale Molgehalt an Diaminen 100 % ausmacht, und gegebenenfalls aus:
c) (A1c) Aminocarbonsäuren und/oder Lactamen, enthaltend Lactame mit bevorzugt 6 bis 12 Kohlenstoffatomen, und/oder Aminocarbonsäuren mit bevorzugt 6 bis 12 Kohlenstoffatomen.

Während die Komponenten (A1a) und (A1b) weitgehend äquimolar eingesetzt werden, beträgt die Konzentration von (A1c) höchstens 20 Gew.-%, bevorzugt höchstens 15 Gew.-%, insbesondere höchstens 12 Gew.-%, jeweils bezogen auf die Summe von (A1a) bis (A1c).

Zusätzlich zu den weitgehend äquimolar eingesetzten Komponenten (A1a) und (A1b) können Dicarbonsäuren (A1a) oder Diamine (A1b) zur Regelung der Molmasse oder zum Ausgleich von Monomerverlusten bei der Polyamidherstellung eingesetzt werden, sodass in ihrer Gesamtheit die Konzentration einer Komponente (A1a) oder (A1b) überwiegen kann.

Geeignete cycloaliphatische Dicarbonsäuren sind die cis- und/oder trans-Cyclohexan-1,4-dicarbonsäure und/oder cis- und/oder trans-Cyclohexan-1,3-dicarbonsäure (CHDA).

Die oben genannten, obligatorisch eingesetzten aliphatischen Diamine können in untergeordneter Menge von nicht mehr als 20 Mol-%, von vorzugsweise nicht mehr als 15 Mol-% und insbesondere nicht mehr als 10 Mol-%, bezogen auf die Gesamtmenge der Diamine, durch andere Diamine ersetzt werden. Als cycloaliphatische Diamine können beispielsweise Cyclohexandiamin, 1,3-Bis-(aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als araliphatische Diamine seien m-Xylylendiamin (MXDA) und p-Xylylendiamin (PXDA) erwähnt.

Zusätzlich zu den beschriebenen Dicarbonsäuren und Diaminen können noch Lactame und/oder Aminocarbonsäuren als polyamidbildende Komponenten (Komponente (A1c)) eingesetzt werden. Geeignete Verbindungen sind beispielsweise Caprolactam (CL), α,ω-Aminocapronsäure, α,ω-Aminononansäure, α,ω-Aminoundecansäure (AUA), Laurinlactam (LL) und α,ω-Aminododecansäure (ADA). Die Konzentration der zusammen mit den Komponenten (A1a) und (A1b) eingesetzten Aminocarbonsäuren und/oder Lactame beträgt höchstens 20 Gew.-%, bevorzugt höchstens 15 Gew.-% und besonders bevorzugt höchstens 12 Gew.-%, bezogen auf die Summe der Komponenten (A1a) bis (A1c). Speziell bevorzugt sind Lactame bzw. α,ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önantholactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

In einer besonders bevorzugten Ausführungsform ist Komponente A1 frei von Caprolactam bzw. Aminocapronsäure.

Zur Regelung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-*tert*-butyl-4-hydroxyphenyl)propansäure, 3,5-di-*tert*-butyl-4-hydroxybenzoesäure, 3-(3-*tert*-butyl-4-hydroxy-5-methylphenyl)propansäure, 2-(3,5-di-*tert*-butyl-4-hydroxybenzylthio)essigsäure, 3,3-bis(3-*tert*-butyl-4-hydroxyphenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, 2,2,6,6-tetramethylpiperidin-4-amin, 1,2,2,6,6-pentamethylpiperidin-4-amin, und 4.amino-2,6-di-*tert* butylphenol. Die Regler können einzeln oder in Kombination benutzt werden. Es können auch andere monofunktionelle Verbindungen als Regler eingesetzt werden, die mit einer Amino- oder Säuregruppe reagieren können, wie Anhydride, Isocyanate, Säurehalogenide oder Ester. Die übliche Einsatzmenge der Regler liegt zwischen 10 und 200 mmol pro kg Polymer.

Die teilaromatischen Copolyamide (A1) können mit an sich bekannten Verfahren hergestellt werden. Geeignete Verfahren sind an verschiedener Stelle beschrieben worden, und in der Folge sollen einige der möglichen in der Patentliteratur diskutierten Verfahren angegeben werden, der Offenbarungsgehalt der nachfolgend genannten Dokumente wird hinsichtlich des Verfahrens zur Herstellung des Copolyamids der Komponente (A) der vorliegenden Erfindung ausdrücklich in den Offenbarungsgehalt der vorliegenden Anmeldung eingeschlossen: DE-A-195 13 940, EP-A-0 976 774, EP-A-0 129 195, EP-A-0 129 196, EP-A-0 299 444, US 4,831,106, US 4,607,073, DE-A-14 95 393 und US 3,454,536.

Konkrete Vertreter für die erfindungsgemäßen Polyamide (A1) sind: PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/12, PA10T/11, PA 6T/9T, PA 6T/12T, PA 6T/10T/6I, PA 6T/6I/6, PA 6T/6I/12 sowie Mischungen davon, insbesondere vorzugsweise ist das teilaromatische Polyamid der Komponente (A) ausgewählt aus der Gruppe: PA 6T/6I, PA 6T/66, PA 6T/10T, PA 6T/10T/6I, sowie Mischungen davon. Bevorzugt werden Polyamide (A1), welche 6T-Einheiten, insbesondere wenigstens 10 Gew.-% an 6T-Einheiten enthalten.

Erfindungsgemäß sind daher als hochschmelzende Polyamide (A1) insbesondere folgende teilaromatische Copolyamide bevorzugt:
- teilkristallines Polyamid 6T/6I mit 50 bis 80 Mol-% Hexamethylenterephthalamid-Einheiten und 20 bis 50 Mol-% Hexamethylenisophthalamid-Einheiten;
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid 6T/6I mit 70 Mol-% Hexamethylenterephthalamid-Einheiten und 30 Mol-% Hexamethylenisophthalamid-Einheiten;
- teilkristallines Polyamid 6T/66 mit 30 bis 80 Mol-% Hexamethylenterephthalamid-Einheiten und 20 bis 70 Mol-% Hexamethylenadipamid-Einheiten
- teilkristallines Polyamid 6T/66 mit 50 bis 70 Mol-% Hexamethylenterephthalamid-Einheiten und 30 bis 50 Mol-% Hexamethylenadipamid-Einheiten;
- teilkristallines Polyamid 6T/66 mit 50 bis 60 Mol-% Hexamethylenterephthalamid-Einheiten und 40 bis 50 Mol-% Hexamethylenadipamid-Einheiten;
- teilkristallines Polyamid 6T/66 mit 55 bis 60 Mol-% Hexamethylenterephthalamid-Einheiten und 40 bis 45 Mol-% Hexamethylenadipamid-Einheiten;
- teilkristallines Polyamid, hergestellt aus mindestens 50 Mol-% Terephthalsäure und höchstens 50 Mol-% Isophthalsäure sowie einer Mischung aus mindestens zwei Diaminen, ausgewählt aus der Gruppe Hexamethylendiamin, Nonandiamin, Methyloctandiamin und Decandiamin;
- teilkristallines Polyamid, hergestellt aus mindestens 70 Mol-% Terephthalsäure und höchstens 30 Mol-% Isophthalsäure sowie einer Mischung aus Hexamethylendiamin und Dodecandiamin;
- teilkristallines Polyamid, hergestellt aus mindestens 50 Mol-% Terephthalsäure und höchstens 50 Mol-% Dodekandisäure sowie einer Mischung aus mindestens zwei Diaminen, ausgewählt aus der Gruppe Hexamethylendiamin, Nonandiamin, Methyloctandiamin und Decandiamin;
- teilkristallines Polyamid 6T/10T mit 10 bis 60 Mol-%, bevorzugt 10 bis 40 Mol-% Hexamethylen-terephthalamid-(6T)- und 40 bis 90 Mol-%, bevorzugt 60 bis 90 Mol-% Decamethylenterephthalamid-(10T)-Einheiten;
- teilkristallines Polyamid 6T/10T/6I mit 50 bis 90 Mol-%, vorzugsweise 50-70 Mol-% Hexamethylenterephthalamid-(6T)-, und 5 bis 45 Mol-%, vorzugsweise 10-30 Mol-% Hexamethylenisophthalamid-(6I)-Einheiten und 5 bis 45 Mol-%, vorzugsweise 20-40 Mol-% Decamethylenterephthalamid-(10T)-Einheiten;
- teilkristallines Polyamid 6T/6I/6 mit 60 bis 85 Mol-% Hexamethylenterephthalamid-(6T)- und 15 bis 40 Mol-% Hexamethylenisophthalamid-(61)-Einheiten, das zusätzlich 5 - 15 Gew.-% Caprolactam enthält.

Das teilaromatische, teilkristalline Polyamid (A1) hat eine Lösungsviskosität ηᵣₑₗ, gemessen nach DIN EN ISO 307 an Lösungen von 0,5 g Polymer in 100 ml m-Kresol bei einer Temperatur von 20°C, von höchstens 2,6, bevorzugt von höchstens 2,3, insbesondere von höchstens 2,0. Bevorzugt werden Polyamide (A1) mit einer Lösungsviskosität ηᵣₑₗ im Bereich von 1,45 bis 2,3, insbesondere im Bereich von 1,5 bis 2,0 oder 1,5 bis 1,8.

Die erfindungsgemäßen Polyamide (A1) können auf üblichen Polykondensationsanlagen über die Prozessfolge Vorkondensat und Nachkondensation hergestellt werden. Für die Polykondensation werden zur Regelung der Viskosität bevorzugt die beschriebenen Kettenregler eingesetzt. Zusätzlich kann die Viskosität durch den Einsatz eines Diamin- oder Disäureüberschusses eingestellt werden.

### Komponente (A2)

Bei der Komponente (A2) handelt es sich um caprolactamhaltige Polyamide mit einem Gehalt an Caprolactam von wenigstens 50 Gew.-%, bevorzugt von mindestens 60 Gew.-% und insbesondere bevorzugt von mindesten 70 Gew.-%. Insbesondere handelt es sich bei (A2) um Polyamid PA 6.

Für den Fall, dass es sich bei der Komponente (A2) um ein Copolymer handelt, sind bevorzugte Comonomere für (A2), die neben Caprolactam eingesetzt werden, zum einen Kombinationen von Diaminen und Dicarbonsäuren, die bevorzugt äquimolar oder nahezu äquimolar eingesetzt werden, und zum anderen Lactame und Aminocarbonsäuren.

Geeignete Diamine sind insbesondere verzweigte oder lineare aliphatische Diamine mit 4 bis 18 C-Atomen. Geeignete Dicarbonsäuren sind aliphatische, cycloaliphatische oder aromatische Dicarbonsäuren mit 6 bis 36 Kohlenstoffatomen.

Gemäß einer ersten bevorzugten Ausführungsform handelt es sich beim C4-C18-Diamin um ein Diamin ausgewählt aus der Gruppe 1,4-Butandiamin, 1,5-Pentandiamin, 2-Methylpentandiamin, 1,6-Hexandiamin, 1,7-Heptandiamin, 1,8-Octandiamin, 1,9-Nonandiamin, Methyl-1,8-Octandiamin, 2,2,4-Trimethylhexandiamin, 2,4,4-Trimethylhexandiamin, 1,10-Decandiamin, 1,11-Undecandiamin, 1,12-Dodecandiamin, 1,13-Tridecandiamin, 1,14-Tetradecandiamin, 1,15-Pentadecandiamin, 1,16-Hexadecandiamin, 1,17-Heptadecandiamin, 1,18-Octadecandiamim, 4,4'-Diaminodicyclohexylmethan (PACM), 2,2-(4,4'-Diaminodicyclohexyl)propan (PACP), 3,3'-Dimethyl-4,4'-diaminodicyclohexylmethan, (MACM)m-Xylylendiamin, p-Xylylendiamin oder eine Mischung derartiger Diamine, wobei 1,6-Hexandiamin, 1,10-Decandiamin, 1,12-Dodecandiamin, oder eine Mischung derartiger Diamine, wobei 1,6-Hexandiamin und 1,10-Decandiamin bevorzugt werden, und 1,6-Hexandiamin alleine besonders bevorzugt ist.

Geeignete aliphatische Dicarbonsäuren sind Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Geeignete cycloaliphatische Dicarbonsäuren sind die cis- und/oder trans-Cyclohexan-1,4-dicarbonsäure und/oder cis- und/oder trans-Cyclohexan-1,3-dicarbonsäure (CHDA). Geeignete aromatische Dicarbonsäuren sind Terephthalsäure, Isophthalsäure und Naphthalindicarbonsäure. Unter den Dicarbonsäuren werden Adipinsäure, Sebazinsäure, Dodecandisäure, Isophthalsäure, Terephthalsäure oder eine Mischung derartiger Dicarbonsäuren, bevorzugt Adipinsäure und Terephthalsäure und besonders Adipinsäure alleine bevorzugt.

Weitere bevorzugte Comonomere für das Polyamid (A2) sind gegebenenfalls Lactame oder Aminocarbonsäuren mit 7 bis 12 Kohlenstoffatomen, wobei Laurinlactam und Aminolaurinsäure besonders bevorzugt werden.

Besonders bevorzugte Polyamide des Typs (A2) sind Copolyamide, hergestellt aus den Monomeren Caprolactam und Laurinlactam bzw. Caprolactam, Hexan-diamin und Adipinsäure bzw. Caprolactam, Hexandiamin und Terephthalsäure, also Copolyamide PA 6/12 bzw. PA 6/66 bzw. PA 6/6T bzw. PA6/12/66 bzw. PA6/66/610, deren Caprolactamgehalt mindestens 50 Gew.-% beträgt.

Das caprolactamhaltige Polyamid (A2) hat eine Lösungsviskosität ηᵣₑₗ, gemessen nach DIN EN ISO 307 an Lösungen von 0,5 g Polymer gelöst in 100 ml m-Kresol bei einer Temperatur von 20 °C, im Bereich von 1,6 bis 3,0, bevorzugt im Bereich von 1,7 bis 2,5, insbesondere im Bereich von 1,8 bis 2,2.

Es ist besonders bevorzugt, dass die Polyamid-Formmasse frei von anorganischen Stabilisatoren auf Basis von Übergangsmetallen und Metallen der III. bis V. Hauptgruppe, insbesondere bevorzugt komplett frei von anorganischen Stabilisatoren ist. Die Polyamidformmasse besteht aus mindestens einem Wärmestabilisator eines orgaanischen Stabilisators ausgewählt aus der Gruppe bestehend aus
- Stabilisatoren auf Basis sekundärer aromatischer Amine, insbesondere Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon,
   - Stabilisatoren auf Basis sterisch gehinderter Phenole, insbesondere, N,N'-Hexamethylen-bis-3-(3,5-di-tert-butyl-4-hydroxyphenyl)-propionamid (Irganox® 1098: Handelsprodukt der Firma BASF), Bis-(3,3-bis-(4'-hydroxy-3'-tert-butylphenyl)-butansäure)-glykolester, 2,1'-Thioethylbis-(3-(3,5-di-tert-butyl-4-hydroxyphenyl)-propionat, 4-4'-Butyliden-bis-(3-methyl-6-tert-butylphenol), Triethylenglykol-3-(3-tert-butyl-4-hydroxy-5-methylphenyl)-propionat, Octadecyl-3-(3,5-di-tert-butyl-4-hydroxyphenyl)propionat (Irganox® 1076: Handelsprodukt der Firma BASF), 1,3,5-Trimethyl-2,4,6-tris(3,5-di-tert-butyl-4-hydroxybenzyl)benzol (Irganox® 1330: Handelsprodukt der Firma BASF, CAS: 1709-70-2) oder Mischungen von zweien oder mehreren davon, Stabilisatoren aus der Gruppe der Phosphite und Phosphonite, insbesondere Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)-phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)penta-erythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit, Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostano® PAR24: Handelsprodukt der Firma Clariant, Basel), Brüggolen TP-H7005, 2,6-di-tert-butyl-4-(4,6-bis(octylthio)-1,3,5-triazian-2-ylamino)phenol (Irganox® 565: Handelsprodukt der Firma BASF), Triethylenglycol bis(3-tert-butyl-4-hydroxy-5-methylphenyl)propionat (Irganox® 245: Handelsprodukt der Firma BASF), Tetrakis-methylene(3,5-di-tert-butyl-4-hydroxyhydrocinnamate)methan (Irganox® 1010: Handelsprodukt der Firma BASF), 3-(3,5-Di-tert-butyl-4-hydroxyphenyl)propionsäure (Irganox® 1310: Handelsprodukt der Firma BASF), 2,2"-Methylenbis-(6-tert-butyl-p-kresol) monoacrylat (Irganox® 3052: Handelsprodukt der Firma BASF) sowie
- Mischungen hiervon.
   Weiterhin ist bevorzugt, dass die Polyamid-Formmasse 0,2 bis 2 Gew.-%, bevorzugt 0,2 bis 1,5 Gew.-%, Stabilisatoren auf Basis sekundärer Amine und/oder 0,1 bis 1,5 Gew.-%, bevorzugt 0,2 bis 1 Gew.-%, Stabilisatoren auf Basis sterisch gehinderter Phenole und/oder 0,1 bis 1,5 Gew.-%, bevorzugt 0,2 bis 1 Gew.-%, Stabilisatoren aus der Gruppe der Phosphite und Phosphonite enthält, wobei der Gesamtanteil an organischen Stabilisatoren in der Polyamid-Formmasse nicht mehr als 3 Gew.-% beträgt.

Unter den Wärmestabilisatoren sind organische Stabilisatoren, da diese beinhaltende PA-Formmassen gegenüber den mit anorganischen Stabilisatoren, wie z.B. Stabilisatoren auf Kupferbasis versehenen PA-Formmassen, ein verbessertes Kontaktkorrosionsverhalten aufweisen.

Das Kontaktkorrosionsverhalten spielt eine grosse Rolle wenn Formkörper aus den erfindungsgemässen Formmassen in Kontakt mit Metallen gebracht werden. Weisen die Formkörper rein organische Stabilisatoren auf kann die Korrosion der berührenden Metalle nahezu vollständig, insbesondere vollständig unterdrückt werden. Das Kontaktkorrosionverhalten lässt sich über die elektrische Leitfähigkeit der PA-Formmasse quantifizieren, sie beträgt 1*10⁻⁶ bis 0.5*10⁻¹¹ S, bevorzugt 1*10⁻⁸ bis 8*10⁻¹⁰ S und insbesondere bevorzugt 3*10⁻⁹ bis 3*10⁻¹⁰ S bestimmt wie im experimentellen Teil beschrieben.

Es ist aber auch möglich, dass der mindestens eine Wärmestabilisator in der Polyamid-Formmasse ein anorganischer Stabilisator ist. Dieser ist insbesondere ausgewählt aus der Gruppe bestehend aus Verbindungen des ein- oder zweiwertigen Kupfers, wobei die Verbindungen des ein- oder zweiwertigen Kupfers vorzugsweise Salze des ein- oder zweiwertigen Kupfers mit anorganischen oder organischen Säuren oder ein- oder zweiwertigen Phenolen, Oxide des ein- oder zweiwertigen Kupfers, und/oder Komplexverbindungen von Kupfersalzen mit Ammoniak, Aminen, Amiden, Lactamen, Cyaniden oder Phosphinen sind, bevorzugt Cu(I)- oder Cu(II)-Salze der Halogenwasserstoffsäuren, der Cyanwasserstoffsäuren oder der aliphatischen Carbonsäuren, besonders bevorzugt die einwertigen Kupferverbindungen CuCl, CuBr, CuI, CuCN und Cu₂O sowie die zweiwertigen Kupferverbindungen CuCl₂, CuSO₄, CuO, Kupfer(II)acetat und Kupfer(II)stearat.

Die anorganischen Stabilisatoren sind in einer Menge von vorzugsweise 0,003 bis 0,5 Gew.-%, bevorzugt 0,005 bis 0,3 Gew.-% und besonders bevorzugt 0,01 bis 0,2 Gew.-% Kupfer enthalten.

Hierbei ist auch möglich, dass es sich bei den Verbindungen des ein- oder zweiwertigen Kupfers um mindestens ein Kupferhalogenid handelt, das kombiniert ist mit mindestens einem weiteren Metallhalogenid, bevorzugt einem Alkalihalogenid, besonders bevorzugt Nal, KI, NaBr oder KBr. Das molare Verhältnis von dem mindestens einen Kupferhalogenid zu dem mindestens einen weiteren Metallhalogenid beträgt dabei 0,5 bis 20, bevorzugt 1 bis 10, besonders bevorzugt 3 bis 7.

Generell kommen für die vorliegende Erfindung sowohl halogenfreie als auch halogenhaltige Flammschutzmittel in Betracht.

Eine bevorzugte Ausführungsform der erfindungsgemäßen Polyamid-Formmasse sieht vor, dass das mindestens eine Flammschutzmittel halogenfrei ist. Das halogenfreie Flammschutzmittel ist dabei bevorzugt ausgewählt aus der Gruppe bestehend aus Melamincyanurat, Melaminphosphat, Melaminpyrophosphat, Melaminpolyphosphat, Melemphosphat, Melempyrophosphat, Dimelaminpyrophosphat, Dimelaminphosphat, Melonpolyphosphat, Phosphaphenanthrene, Metallhydroxiden, Phosphinsäuresalzen, Diphosphinsäuresalzen und Kombinationen hiervon.

Weiterhin ist bevorzugt, dass das Flammschutzmittel zusätzlich mindestens einen Synergisten enthält, wobei der mindestens eine Synergist bevorzugt ausgewählt ist aus der Gruppe bestehend aus stickstoffhaltigen Verbindungen, stickstoff- und phosphorhaltigen Verbindungen, Metallboraten, Metallcarbonaten, Metallhydroxiden, Metallhydroxyoxiden, Metallnitriden, Metalloxiden, Metallphosphaten, Metallsulfiden, Metallstannaten, Metallhydroxystannaten, Silikaten, Zeolithen, basischen Zinksilikaten, Kieselsäuren und Kombinationen hiervon, insbesondere Triazinderivaten, Melamin, Guanidin, Guanidinderivaten, Biuret, Triuret, Tartrazin, Glycoluril, Acetoguanamin, Butyroguanamin, Caprinoguanamin, Benzoguanamin, Melaminderivaten der Cyanursäure, Melaminderivaten der Isocyanursäure, Melamincyanurat, Kondensationsprodukten des Melamins, Melaminpyrophosphat, Pyrophosphaten der Kondensationsprodukte des Melamins, Dimelaminphosphat, Dimelaminpyrophosphat, Melaminpolyphosphat, Dicyandiamid, Ammoniumpolyphosphat, Ammoniumhydrogenphosphat, Ammoniumdihydrogenphosphat, Polyphosphaten der Kondensationsprodukte des Melamins, Melaminsulfat, Allantoin, Aluminiumhydroxid, synthetischem Aluminiummetahydroxid (synthetischem Aluminiumhydroxyoxid), natürlichem Aluminiummetahydroxid (natürlichem Aluminiumhydroxyoxid), Aluminiumoxid, Calciumborat, Calciumcarbonat, Calciummagnesiumcarbonat, Calciumoxid, Calciumsulfid, Eisenoxid, Magnesiumborat, Magnesiumcarbonat, Magnesiumhydroxid, Magnesiumnitrid, Magnesiumoxid, Magnesiumsulfid, Manganhydroxid, Manganoxid, Titannitrid, Titandioxid, Zinkborat, Zinkmetaborat, Zinkcarbonat, Zinkhydroxid, Zinknitrid, Zinkoxid, Zinkphosphat, Zinksulfid, Zinkstannat, Zinkhydroxystannat, basischem Zinksilikat, Zinnoxidhydrat und Kombinationen hiervon.

Es ist aber ebenso möglich, dass das Flammschutzmittel frei von Synergisten ist.

Weiterhin ist bevorzugt, dass das mindestens eine Flammschutzmittel ein Phosphinsäuresalz der allgemeinen Formel (I) 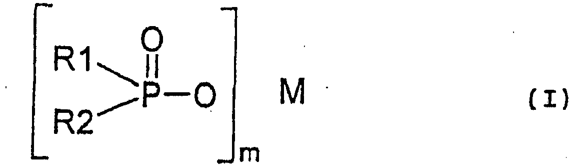 und/oder Formel (II) 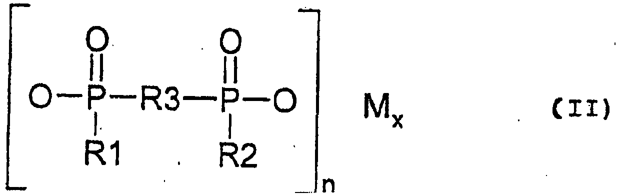 und/oder eines ihrer Polymere ist, wobei R1 und R2 gleich oder verschieden sind und ausgewählt sind aus der Gruppe bestehend aus linearem oder verzweigtem C1-C8-Alkyl und/oder Aryl, R3 ausgewählt ist aus der Gruppe bestehend aus linearem oder verzweigtem C1-C10-Alkylen, C6-C10-Arylen, Alkylarylen und Arylalkylen, M ein Metallion aus der 2. oder 3. Haupt- oder Nebengruppe des Periodensystems, bevorzugt Al, Ba, Ca oder Zn, ist, m 2 oder 3, n 1 oder 3, und x 1 oder 2 beträgt.

Besonders bevorzugt ist das Flammschutzmittel, das von der Firma Clariant kommerzialisierte Flammschutzmittel Exolit OP 1230, bei welchem es sich um das Aluminiumsalz der Diethylphosphinsäure (CAS-Nr. 225789-38-8) handelt.

Insbesondere bevorzugt sind metallfreie Flammschutzmittel.

Vorzugsweise enthält die Polyamid-Formmasse 5 bis 24 Gew.-%, bevorzugt 6 bis 23 Gew.-%, besonders bevorzugt 7 bis 21 Gew.-%, des mindestens einen Flammschutzmittels. Werden mehr als 25 Gew.-% von Komponente b) zugegeben, leiden die mechanischen Eigenschaften zu stark, unterhalb von 5 Gew.-% hingegen werden die flammhemmenden Eigenschaften negativ beeinflusst.

In einer bevorzugten Ausführungsform ist die Formmasse gemäss IEC 60695-11-10 der (UL94) als V-0 klassifiziert.

In einer weiteren bevorzugten Ausführungsform der erfindungsgemäßen Polyamid-Formmasse ist das mindestens eine Additiv ausgewählt aus der Gruppe bestehend aus Lichtschutzmitteln, UV-Stabilisatoren, UV-Absorbern oder UV-Blockern, Gleitmitteln, Farbstoffen, Nukleierungsmitteln, Antistatika, Leitfähigkeitsadditiven, Entformungsmitteln, Füllmitteln, Verstärkungsmitteln, optischen Aufhellern oder Mischungen hiervon.

Die Antistatika sind bevorzugt ausgewählt aus der Gruppe bestehend aus Ruß, Kohlenstoffnanoröhrchen oder Gemischen hiervon. Die Verwendung von Ruß kann auch der Verbesserung der Schwarzfärbung der Polyamid-Formmasse dienen.

Die Füllmittel sind insbesondere ausgewählt aus der Gruppe bestehend aus Whiskers, Talkum, Glimmer, Silicaten, Quarz, Titandioxid, Wollastonit, Kaolin, Kieselsäuren, Magnesiumcarbonat, Magnesiumhydroxid, Kreide gemahlen oder gefälltem Calciumcarbonat, Kalk, Feldspat, Bariumsulfat, Glaskugeln, Hohlglaskugeln, hohlkugligen Silikatfüllstoffen, natürlichen Schichtsilikaten, synthetischen Schichtsilikaten und Mischungen hiervon.

Verstärkungsmittel sind bevorzugt Fasern, insbesondere Glasfasern und/oder Kohlenstofffasern. Weiterhin ist bevorzugt, dass es sich bei den Fasern um Fasern mit kreisförmiger Querschnittsfläche, um Fasern mit nicht-kreisförmiger Querschnittsfläche oder um ein Gemisch aus Fasern mit kreisförmiger Querschnittsfläche und Fasern mit nicht-kreisförmiger Querschnittsfläche handelt, wobei der Anteil an Fasern mit nicht kreisförmiger Querschnittsfläche am Gemisch bevorzugt min. 50 Gew.-% und bei den Fasern mit der nicht-kreisförmigen Querschnittsfläche das Abmessungsverhältnis von der Hauptquerschnittsachse zur Nebenquerschnittsachse bevorzugt >2 ist, besonders bevorzugt im Bereich von 2 bis 8, ganz besonders bevorzugt im Bereich von 3 bis 5, liegt. Vorzugsweise sind die Fasern Kurzfasern, bevorzugt mit einer Länge im Bereich von 2 bis 50 mm und einem Durchmesser von 5 bis 40 µm, und/oder Endlosfasern (Rovings).

Werden flache Glasfasern mit nicht-kreisförmiger Querschnittsfläche verwendet, werden diese bevorzugt als Kurzglasfaser (Schnittglas mit einer Länge von 0,2 bis 20 mm, bevorzugt von 2 bis 12 mm) eingesetzt.

Eine weitere bevorzugte Ausführungsform sieht vor, dass das Verstärkungsmittel Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, besonders bevorzugt von 3 bis 5, sind, wobei die Glasfasern eine ovale, elliptische, mit Einschnürungen oder einer Einschnürung versehene elliptische, rechteckige oder nahezu rechteckige Querschnittsfläche aufweisen und die Glasfasern bevorzugt 0,2 bis 20 mm, besonders bevorzugt 2 bis 12 mm, lang sind, wobei die Länge der Hauptquerschnittsachse bevorzugt im Bereich von 6 bis 40 µm, besonders bevorzugt im Bereich von 15 bis 30 µm, und die Länge der Nebenquerschnittsachse bevorzugt im Bereich von 3 bis 20 µm, besonders bevorzugt, im Bereich von 4 bis 10 µm, liegt.

In einer weiteren bevorzugten Ausführungsform der erfindungsgemäßen Polyamid-Formmasse ist diese frei von metallischen Pigmenten.

Zur Verwendung für Anwendungen bei denen das Kontaktkorrosionsverhalten von Relevanz ist eine Formmasse wie folgt bevorzugt:
a) 22 bis 99,99 Gew.-% einer Polyamidmischung bestehend aus
   (A1) mindestens einem teilaromatischen, teilkristallinen Polyamid mit einem Schmelzpunkt im Bereich von 255 bis 330 °C
   (A2) mindestens einem sich vom mindestens einen teilaromatischen, teilkristallinen Polyamid (A1) unterscheidenden caprolactamhaltigen Polyamid mit einem Gehalt an Caprolactam von wenigstens 50 Gew.-%,
      wobei der Gesamtcaprolactamgehalt des im Polyamid (A1) und Polyamid (A2) enthaltenen Caprolactam, bezogen auf die Polyamidmischung, 3 bis 35 Gew.-% beträgt,
b) 0.01 bis 3.0 Gew.-% mindestens eines organischen Wärmestabilisators, insbesondere Stabilisatoren auf Basis sterisch gehinderter Phenole, und
c) 0 bis 50 Gew.-% mindestens eines Additivs,
bereitgestellt, wobei sich die Komponenten a) bis c) auf 100 Gew.-% ergänzen. Die Polyamid-Formmasse ist dabei frei von Metallsalzen und Metalloxiden.

Desweiteren betrifft die vorliegende Erfindung ein Verfahren zur Herstellung von derartigen Polyamid-Formmassen. Sie betrifft zudem Formkörper, die unter Verwendung von derartigen Polyamid-Formmassen hergestellt werden.

### Anwendungen

Zudem betrifft die Erfindung Verwendungen von Formteilen, welche wenigstens teilweise aus derartigen Polyamid-Formmassen bestehen. Bevorzugt sind Formteile, die wenigstens teilweise in Kontakt mit Metallen gebracht werden.

Für den Automobilbereich seien beispielhaft genannt: Zylinderkopfhauben, Motorabdeckungen, Gehäuse für Ladeluftkühler, Ladeluftkühlerklappen, Ansaugrohre, insbesondere Ansaugkrümmer, Konnektoren, Zahnräder, Lüfterräder, Kühlwasserkästen, Gehäuse oder Gehäuseteile für Wärmetauscher, Kühlmittelkühler, Ladeluftkühler, Thermostat, Wasserpumpe, Heizkörper, Befestigungsteile. Im Bereich Elektro/Elektronik sind solche Verwendungen beispielsweise Teile von Fremdstartstützpunkten, Leiterplatten, Gehäusen, Folien, Leitungen, Schaltern, Verteilern, Relais, Widerstände, Kondensatoren, Spulen, Lampen, Dioden, LEDs, Transistoren, Konnektoren, Regler, Speicher und Sensoren.

Die vorliegende Erfindung wird anhand der nachfolgenden Beispiele näher erläutert ohne die Erfindung auf die hier dargestellten spezifischen Ausführungsformen zu beschränken.

### Beispiele

In Tabelle 1 sind die für die Beispiele eingesetzten Materialien zusammengefasst.

**Tabelle 1**

| Stoff | Handelsname | Lieferant | rel. Visko-sität | H₂O-Gehalt [Gew.-%] |
|---|---|---|---|---|
| PA 6T/66 (55:45 mol-%) | - | EMS-CHEMIE AG (CH) | 1.58^{a} | ≤0.08 |
| PA 6 | Grilon A28 | EMS-CHEMIE AG (CH) | 2.75^{b} | ≤0.08 |
| KI/Ca-Stearat (Verhältnis 98:2) | - | AJAY Europe (FR)^{c} | - | - |
| Kupferiodid | - | William Blythe (UK) | - | - |
| Kaolin | - | ECC (GB) | - | - |
| Stabilisatormischung | Recycloblend® 660 | PolyAd Services (DE) | - | - |
| Stabilisator 1 | Irganox 1076 | BASF (CH) | - | - |
| Stabilisator 2 | Irganox 1098 | BASF (CH) | - | - |
| Stabilisator 3 | Irganox 1330 | BASF (CH) | - | - |
| Flammschutzmittel | Exolit OP1230 | Clariant (DE) | - | - |
| Glasfaser | Vetrotrex 995 EC10-4.5 | OCV (FR) | - | - |

| | | | | |
|---|---|---|---|---|
| *a) Bestimmt nach ISO 307 (0.5 g Polyamid in 100 ml m-Kresol), Berechnung der relativen Viskosität (RV) nach RV* = *t*/*t₀ in Anlehnung an Abschnitt 11 der Norm; b) Bestimmt nach ISO 307 (0.5 g Polyamid in 100 ml Ameisensäure), Berechnung der relativen Viskosität (RV) nach RV* = *t*/*t₀ in Anlehnung an Abschnitt 11 der Norm; c) Lieferant von KI, Abmischung mit Ca-Stearat erfolgt bei EMS.* | | | | |

### Herstellung der Formmassen und Compounds

Die Formmassen für die erfindungsgemäßen Beispiele B1 bis B6 sowie für das Vergleichsbeispiel VB1 wurden auf einem Zweiwellenextruder der Fa. Werner und Pfleiderer Typ ZSK25 hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert.

**Tabelle 2**

| **Zusammensetzung** | B1 | B2 | B3 | B4 | B5 | B6 | VB1 |
|---|---|---|---|---|---|---|---|
| PA 6T/66 | 46.9 | 42.485 | 52.0 | 51.835 | 50.835 | 51.835 | 57.485 |
| PA 6 | 10.5 | 15.0 | 16.9 | 16.9 | 16.9 | 16.9 | - |
| KI/Ca-Stearat | 0.3 | - | 0.3 | - | - | - | - |
| Kupferiodid | 0.035 | - | 0.035 | - | - | - | - |
| Kaolin | 0.265 | 0.265 | 0.265 | 0.265 | 0.265 | 0.265 | 0.265 |
| Stabilisatormischung | - | - | 0.5 | - | - | - | - |
| Stabilisator 1 | - | - | - | 1.0 | 2.0 | - | - |
| Stabilisator 2 | - | 0.25 | - | - | - | - | 0.25 |
| Stabilisator 3 | - | - | - | - | - | 1.0 | - |
| Flammschutzmittel | 12.0 | 12.0 | - | - | - | - | 12.0 |
| Glasfaser | 30.0 | 30.0 | 30.0 | 30.0 | 30.0 | 30.0 | 30.0 |
| **Eigenschaften** | | | | | | | |
| Flammhemmung | V-0 | V-0 | n.b. | n.b. | n.b. | n.b. | V-0 |
| Kontaktkorrosionsverhalten | (-) | (+) | (-) | (+) | (+) | (+) | (+) |
| Leitfähigkeit konditioniert [S] | 5.2*10⁻⁹ | 4.4* 10⁻¹¹ | 1.2*10⁻¹⁰ | 1.3*10⁻¹¹ | 1.0*10⁻¹¹ | 1.1*10⁻¹¹ | 5.3*10⁻¹¹ |
| CTI konditioniert [V] | 575 | 600 | 575 | 600 | 600 | 600 | 600 |
| Wärmealterungsbeständigkeit | (+) | (+) | (+) | (+) | (+) | (+) | (-) |

| | | | | | | | |
|---|---|---|---|---|---|---|---|
| *n.b.* = *nicht bestimmt(+)* = *keine sichtbare Korrosion; (-)* = *sichtbare Korrosion* | | | | | | | |

Die Polyamid-Granulate wurden zusammen mit den Additiven in die Einzugszone dosiert, während die Glasfaser über Sidefeeder 3 Gehäuseeinheiten vor der Düse in die Polymerschmelze dosiert wurde. Die Gehäusetemperatur wurde als aufsteigendes Profil bis 320°C eingestellt. Bei 150 bis 250 upm wurden 15 kg Durchsatz erreicht. Nach Abkühlen der Stränge im Wasserbad, Granulierung und Trocknung bei 120°C für 24 Stunden erfolgte das Verspritzen der Compounds zu ISO-Prüfkörpern. Es wurde auf einer Spritzgussmaschine Arburg Allrounder 320-210-750 bei Zylindertemperaturen von 300°C bis 325°C der Zonen 1 bis 4 und einer Werkzeugtemperatur von 135°C verspritzt.

In Tabelle 3 sind die mechanischen Eigenschaften nach Wärmelagerung bei 220 °C zusammengefasst.

**Tabelle 3**

| | VB1 | B2 |
|---|---|---|
| **Mechanische Eigenschaften (nach 0 h)** | | |
| Bruchfestigkeit [MPa] | 139.7 | 161.1 |
| Bruchdehnung [%] | 1.6 | 2.4 |
| **Mechanische Eigenschaften (nach 1000 h)** | | |
| Bruchfestigkeit [MPa] | 30.9 | 150.5 |
| Bruchdehnung [%] | 0.5 | 1.9 |
| **Mechanische Eigenschaften (nach 1500 h)** | | |
| Bruchfestigkeit [MPa] | 11.3 | 148.3 |
| Bruchdehnung [%] | 0.1 | 1.9 |
| **Mechanische Eigenschaften (nach 2000 h)** | | |
| Bruchfestigkeit [MPa] | 7.8 | 131.2 |
| Bruchfestigkeit bezogen auf den Ausgangswert [%] | 5.6 | 81.4 |
| Bruchdehnung [%] | 0.1 | 1.5 |
| Bruchdehnung bezogen auf den Ausgangswert [%] | 6.3 | 62.5 |

Die Bestimmung der in den Tabellen 2 und 3 angegebenen Eigenschaften erfolgte nach den folgenden Methoden.

### Durchführung der Wärmelagerung

Die Wärmelagerungen wurden in belüfteten, elektrisch beheizten Einzelkammer-Wärmeschränken nach IEC 60216-4-1 bei 220°C an ISO-Zugstäben (Norm: ISO 3167, Typ A, 170 x 20/10 x 4 mm) durchgeführt. Nach den in Tabelle 3 angegebenen Zeiten wurden Probekörper dem Ofen entnommen und nach Abkühlen auf 23°C nach den unten angegebenen Methoden geprüft.

### Bestimmung der Bruchfestigkeit und Bruchdehnung

Die Bestimmung der Bruchfestigkeit und Bruchdehnung erfolgte gemäß der ISO 527 mit einer Zuggeschwindigkeit von 5 mm/min an einem ISO-Zugstab gemäß der Norm ISO 3167, Typ A mit den Dimensionen 170 x 20/10 x 4 mm bei einer Temperatur von 23 °C.

### Bestimmung der flammhemmenden Eigenschaften

Die flammhemmenden Eigenschaften wurden im vertikalen Brandtest gemäß IEC 60695-11-10 (UL94) an Probekörpern mit einer Wanddicke von 0.8 mm bestimmt. Die Probekörper wurden vor der Prüfung für 7 Tage bei 70 °C gelagerbt.

### Beurteilung der Wärmealterungsbeständigkeit

Die Wärmealterungsbeständigkeit wurde mit (+) bewertet, wenn die wie oben beschrieben bestimmten mechanischen Eigenschaften nach 2000 Stunden noch grösser als 50 % der Ausgangswerte, d.h. vor der Wärmelagerung, betrugen.

### Beurteilung des Kontaktkorrosionsverhaltens

### Beschreibung der visuellen Beurteilung einfügen

Platten der Materialien (80*80*3 mm, Filmanguss) wurden zunächst 500 Stunden bei 85 °C und 85% Luftfeuchtigkeit gelagert. Auf die vorgelagerten Platten wurde nachfolgend ein Kupferblech (10*80*1 mm) gepresst.

Die mit dem Kupferblech kontaktierten Platten wurde für weitere 1000 Stunden bei Raumklima gelagert und nachfolgend das Kupferblech entfernt und die Korrosion visuell beurteilt.

### Bestimmung der Leitfähigkeit

Platten der Materialien (80*80*3mm, Filmanguss) wurden zunächst 500 Stunden bei 85 °C und 85% Luftfeuchtigkeit gelagert. Nachfolgend wurden die Platten in der diagonalen mit zwei Streifen Leitsilber (200N Hans Wolbring GmbH) im Abstand von einem Zentimeter versehen. Die Oberfläche wurde auf den Leitsilberstreifen kontaktiert und der Oberflächenwiderstand konditioniert gemessen. Die angegebene Leitfähigkeit entspricht dem reziproken Oberflächenwiderstand.

### Bestimmung der Kriechstromfestigkeit (CTI)

Die Bestimmung der CTI erfolgte gemäss der IEC60112.

## Patentansprüche

1. Polyamid-Formmasse bestehend aus
a) 22 bis 99,99 Gew.-% einer Polyamidmischung bestehend aus
(A1) mindestens einem teilaromatischen, teilkristallinen Polyamid mit einem Schmelzpunkt im Bereich von 255 bis 330 °C (A2
) mindestens einem sich vom mindestens einen teilaromatischen, teilkristallinen Polyamid (A1) unterscheidenden caprolactamhaltigen Polyamid mit einem Gehalt an Caprolactam von wenigstens 50 Gew.-%,
wobei der Gesamtcaprolactamgehalt des im Polyamid (A1) und Polyamid (A2) enthaltenen Caprolactam, bezogen auf die Polyamidmischung, 3 bis 35 Gew.-% beträgt,
b) 0 bis 25 Gew.-% mindestens eines Flammschutzmittels,
c) 0.01 bis 3.0 Gew.-% mindestens eines organischen Wärmestabilisators, und
d) 0 bis 50 Gew.-% mindestens eines Additivs,
wobei sich die Komponenten a) bis d) auf 100 Gew.-% ergänzen,
**dadurch gekennzeichnet, dass** die Polyamid-Formmasse frei von Metallsalzen und Metalloxiden eines Übergangsmetalls der Gruppe VB, VIB, VIIB oder VIIIB des Periodensystems ist.

2. Polyamid-Formmasse nach dem vorhergehenden Anspruch **dadurch gekennzeichnet**, das die elektrische Leitfähigkeit der Formmasse 1*10⁻⁶ bis 0.5*10⁻¹¹ S, bevorzugt 1*10⁻⁸ bis 8*10⁻¹⁰ S und insbesondere bevorzugt 3*10⁻⁹ bis 3*10⁻¹⁰ S beträgt.

3. Polyamid-Formmasse nach einem der vorhergehenden Ansprüche, **dadurch gekennzeichnet, dass** die Polyamid-Formmasse frei von anorganischen Stabilisatoren auf Basis von Übergangsmetallen und Metallen der III. bis V. Hauptgruppe ist.

4. Polyamid-Formmasse nach einem der vorhergehenden Ansprüche, **dadurch gekennzeichnet, dass** der mindestens eine organische Wärmestabilisator ausgewählt ist aus der Gruppe bestehend aus
• Stabilisatoren auf Basis sekundärer aromatischer Amine, insbesondere Addukte aus Phenylendiamin mit Aceton, Addukte aus Phenylendiamin mit Linolen, N,N'-Dinaphthyl-p-phenylendiamin, N-Phenyl-N'-cyclohexyl-p-phenylendiamin oder Mischungen von zwei oder mehreren davon,
• Stabilisatoren auf Basis sterisch gehinderter Phenole, insbesondere, N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di-tert-butyl-4-hydroxyphenyl)-propionat, 4-4'-Butyliden-bis-(3-methyl-6-tert-butylphenol), Triethylenglykol-3-(3-tert-butyl-4-hydroxy-5-methylphenyl)-propionat, Octadecyl-3-(3,5-di-tert-butyl-4-hydroxyphenyl)propionat, 1,3,5-Trimethyl-2,4,6-tris(3,5-di-tert-butyl-4-hydroxybenzyl)benzol oder Mischungen von zweien oder mehreren davon,
• Stabilisatoren aus der Gruppe der Phosphite und Phosphonite, insbesondere Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxa-phosphocin, 6-Fluoro-2,4,8,10-tetra-tert-butyl-12-methyl-dibenz-[d,g]-1,3,2-dioxaphosphocin, Bis(2,4-di-tert-butyl-6-methylphenyl)-methylphosphit und Bis(2,4-di-tert-butyl-6-methylphenyl)ethyl-phosphit, Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit, 2,6-di-tert-butyl-4-(4,6-bis(octylthio)-1,3,5-triazian-2-ylamino)phenol, Triethylenglycol bis(3-tert-butyl-4-hydroxy-5-methylphenyl)propionat, Tetrakis-methylene(3,5-di-tert-butyl-4-hydroxyhydrocinnamate)methan, 3-(3,5-Di-tert-butyl-4-hydroxyphenyl)propionsäure, 2,2"-Methylenbis-(6-tert-butyl-p-kresol) monoacrylat sowie
• Mischungen hiervon.

5. Polyamid-Formmasse nach dem vorhergehenden Anspruch,
**dadurch gekennzeichnet, dass** diese 0,2 bis 2 Gew.-%, bevorzugt 0,2 bis 1,5 Gew.-%, Stabilisatoren auf Basis sekundärer Amine und/oder 0,1 bis 1,5 Gew.-%, bevorzugt 0,2 bis 1 Gew.-%, Stabilisatoren auf Basis sterisch gehinderter Phenole und/oder 0,1 bis 1,5 Gew.-%, bevorzugt 0,2 bis 1 Gew.-%, Stabilisatoren aus der Gruppe der Phosphite und Phosphonite enthält.

6. Polyamid-Formmasse nach einem der vorhergehenden Ansprüche, **dadurch gekennzeichnet, dass** das mindestens eine Flammschutzmittel halogenfrei ist, wobei das halogenfreie Flammschutzmittel bevorzugt ausgewählt ist aus der Gruppe bestehend aus Melamincyanurat, Melaminphosphat, Melaminpyrophosphat, Melaminpolyphosphat, Melemphosphat, Melempyrophosphat, Dimelaminpyrophosphat, Dimelaminphosphat, Melonpolyphosphat, Phosphaphenanthrene, Metallhydroxiden, Phosphinsäuresalzen, Diphosphinsäuresalzen und Kombinationen hiervon.

7. Polyamid-Formmasse nach einem der vorhergehenden Ansprüche, **dadurch gekennzeichnet, dass** das Flammschutzmittel zusätzlich mindestens einen Synergisten enthält, wobei der mindestens eine Synergist bevorzugt ausgewählt ist aus der Gruppe bestehend aus stickstoffhaltigen Verbindungen, stickstoff- und phosphorhaltigen Verbindungen, Metallboraten, Metallcarbonaten, Metallhydroxiden, Metallhydroxyoxiden, Metallnitriden, Metalloxiden, Metallphosphaten, Metallsulfiden, Metallstannaten, Metallhydroxystannaten, Silikaten, Zeolithen, basischen Zinksilikaten, Kieselsäuren und Kombinationen hiervon, insbesondere Triazinderivaten, Melamin, Guanidin, Guanidinderivaten, Biuret, Triuret, Tartrazin, Glycoluril, Acetoguanamin, Butyroguanamin, Caprinoguanamin, Benzoguanamin, Melaminderivaten der Cyanursäure, Melaminderivaten der Isocyanursäure, Melamincyanurat, Kondensationsprodukten des Melamins, Melaminpyrophosphat, Pyrophosphaten der Kondensationsprodukte des Melamins, Dimelaminphosphat, Dimelaminpyrophosphat, Melaminpolyphosphat, Dicyandiamid, Ammoniumpolyphosphat, Ammoniumhydrogenphosphat, Ammoniumdihydrogenphosphat, Polyphosphaten der Kondensationsprodukte des Melamins, Melaminsulfat, Allantoin, Aluminiumhydroxid, synthetischem Aluminiumhydroxyoxid wie synthetisches Aluminiummetahydroxid, natürlichem Aluminiumhydroxyoxid wie natürliches Aluminiummetahydroxid, Aluminiumoxid, Calciumborat, Calciumcarbonat, Calciummagnesiumcarbonat, Calciumoxid, Calciumsulfid, Eisenoxid, Magnesiumborat, Magnesiumcarbonat, Magnesiumhydroxid, Magnesiumnitrid, Magnesiumoxid, Magnesiumsulfid, Manganhydroxid, Manganoxid, Titannitrid, Titandioxid, Zinkborat, Zinkmetaborat, Zinkcarbonat, Zinkhydroxid, Zinknitrid, Zinkoxid, Zinkphosphat, Zinksulfid, Zinkstannat, Zinkhydroxystannat, basischem Zinksilikat, Zinnoxidhydrat und Kombinationen hiervon.

8. Polyamid-Formmasse nach einem der vorhergehenden Ansprüche, **dadurch gekennzeichnet, dass** das mindestens eine Flammschutzmittel ein Phosphinsäuresalz der allgemeinen Formel (I) 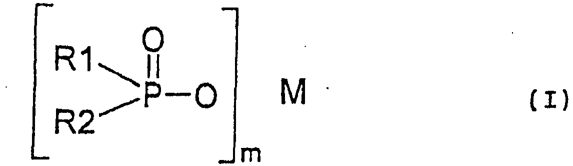 und/oder Formel (II) 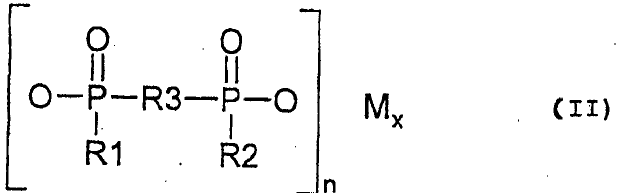 und/oder eines ihrer Polymere ist, wobei R1 und R2 gleich oder verschieden sind und ausgewählt sind aus der Gruppe bestehend aus linearem oder verzweigtem C1-C8-Alkyl und/oder Aryl, R3 ausgewählt ist aus der Gruppe bestehend aus linearem oder verzweigtem C1-C10-Alkylen, C6-C10-Arylen, Alkylarylen und Arylalkylen, M ein Metallion aus der 2. oder 3. Haupt- oder Nebengruppe des Periodensystems, bevorzugt Al, Ba, Ca oder Zn, ist, m 2 oder 3, n 1 oder 3, und x 1 oder 2 beträgt.

9. Polyamid-Formmasse nach einem der vorhergehenden Ansprüche, **dadurch gekennzeichnet, dass** 5 bis 24 Gew.-%, bevorzugt 6 bis 23 Gew.-%, besonders bevorzugt 7 bis 21 Gew.-% des mindestens einen Flammschutzmittels in der Polyamid-Formmasse enthalten sind.

10. Polyamid-Formmasse nach einem der vorhergehenden Ansprüche, **dadurch gekennzeichnet, dass** das mindestens eine Additiv ausgewählt ist aus der Gruppe bestehend aus
• Lichtschutzmitteln, UV-Stabilisatoren, UV-Absorbern oder UV-Blockern,
• Gleitmitteln,
• Farbstoffen,
• Nukleierungsmitteln,
• Antistatika, insbesondere ausgewählt aus der Gruppe bestehend aus Ruß, Kohlenstoffnanoröhrchen oder Gemischen hiervon
• Leitfähigkeitsadditiven,
• Entformungsmitteln,
• Füllmitteln, insbesondere ausgewählt aus der Gruppe bestehend aus Whiskers, Talkum, Glimmer, Silicaten, Quarz, Titandioxid, Wollastonit, Kaolin, Kieselsäuren, Magnesiumcarbonat, Magnesiumhydroxid, Kreide gemahlen oder gefälltem Calciumcarbonat, Kalk, Feldspat, Bariumsulfat, Glaskugeln, Hohlglaskugeln, hohlkugligen Silikatfüllstoffen, natürlichen Schichtsilikaten, synthetischen Schichtsilikaten und Mischungen hiervon,
• Verstärkungsmitteln,
• optischen Aufhellern oder
• Mischungen hiervon.

11. Polyamid-Formmasse nach dem vorhergehenden Anspruch,
**dadurch gekennzeichnet, dass** als Verstärkungsmittel Fasern enthalten sind, insbesondere Glasfasern und/oder Kohlenstofffasern.

12. Polyamid-Formmasse nach dem vorhergehenden Anspruch,
**dadurch gekennzeichnet, dass** es sich bei den Fasern um Fasern mit kreisförmiger Querschnittsfläche, um Fasern mit nicht-kreisförmiger Querschnittsfläche oder um ein Gemisch aus Fasern mit kreisförmiger Querschnittsfläche und Fasern mit nicht-kreisförmiger Querschnittsfläche handelt, wobei der Anteil an Fasern mit nicht kreisförmiger Querschnittsfläche am Gemisch bevorzugt min. 50 Gew.-% und bei den Fasern mit der nicht-kreisförmigen Querschnittsfläche das Abmessungsverhältnis von der Hauptquerschnittsachse zur Nebenquerschnittsachse bevorzugt >2 ist, besonders bevorzugt im Bereich von 2 bis 8, ganz besonders bevorzugt im Bereich von 3 bis 5, liegt.

13. Polyamid-Formmasse nach einem der Ansprüche 11 oder 12,
**dadurch gekennzeichnet, dass** die Fasern Kurzfasern, bevorzugt mit einer Länge im Bereich von 2 bis 50 mm und einem Durchmesser von 5 bis 40 µm, und/oder Endlosfasern sind.

14. Polyamid-Formmasse nach einem der vorhergehenden Ansprüche, **dadurch gekennzeichnet, dass** diese frei von metallischen Pigmenten ist.

15. Formkörper hergestellt aus einer Polyamid-Formmasse nach einem der vorhergehenden Ansprüche, bevorzugt in Form eines Bauteils für den Automobil- oder Elektro/Elektronikbereich, insbesondere Zylinderkopfhauben, Motorabdeckungen, Gehäuse für Ladeluftkühler, Ladeluftkühlerklappen, Ansaugrohre, Ansaugkrümmer, Konnektoren, Zahnräder, Lüfterräder, Kühlwasserkästen, Gehäuse oder Gehäuseteil für Wärmetauscher, Kühlmittelkühler, Ladeluftkühler, Thermostat, Wasserpumpe, Heizkörper, Befestigungsteile, in Form eines elektrischen oder elektronischen Bauteils, Teilen von Fremdstartstützpunkten, einer Leiterplatte, einem Teil einer Leiterplatte, eines Gehäusebestandteils, einer Folie, einer Leitung, insbesondere in Form eines Schalters, eines Verteilers, eines Relais, eines Widerstandes, eines Kondensators, einer Spule, einer Lampe, einer Diode, einer LED, eines Transistors, eines Konnektors, eines Reglers, eines Speichers und/oder eines Sensors, wobei Bauteile die zumindest teilweise in Kontakt mit einem Metall stehen bevorzugt sind.

## Claims

1. Polyamide moulding compound consisting of
a) 22 to 99.99% by weight of a polyamide mixture, consisting of
(A1) at least one partially aromatic, partially crystalline polyamide with a melting point in the range of 255 to 330°C,
(A2) at least one caprolactam-containing polyamide which differs from the at least one partially aromatic, partially crystalline polyamide (A1) and has a content of caprolactam of at least 50% by weight,
the total caprolactam content of the caprolactam contained in polyamide (A1) and polyamide (A2), relative to the polyamide mixture, being 3 to 35% by weight,
b) 0 to 25% by weight of at least one flame retardant,
c) 0.01 to 3.0% by weight of at least one organic heat stabiliser and
d) 0 to 50% by weight of at least one additive,
components a) to d) adding up to 100% by weight,
**characterised in that** the polyamide moulding compound is free of metal salts and metal oxides of a transition metal of group VB, VIB, VIIB or VIIIB of the periodic table.

2. Polyamide moulding compound according to the preceding claim, **characterised in that** the electrical conductivity of the moulding compound is 1*10⁻⁶ to 0.5*10⁻¹¹ S, preferably 1*10⁻⁸ to 8*10⁻¹⁰ S and particularly preferred 3*10⁻⁹ to 3*10⁻¹⁰ S.

3. Polyamide moulding compound according to one of the preceding claims, **characterised in that** the polyamide moulding compound is free of inorganic stabilisers based on transition metals and metals of the main group III to V.

4. Polyamide moulding compound according to one of the preceding claims, **characterised in that** the at least one organic heat stabiliser is selected from the group consisting of
• stabilisers based on secondary aromatic amines, in particular adducts of phenylenediamine with acetone, adducts of phenylenediamine with linolene, N,N'-dinaphthyl-p-phenylenediamine, N-phenyl-N'-cyclohexyl-p-phenylenediamine or mixtures of two or more thereof,
• stabilisers based on sterically hindered phenols, in particular N,N'-hexamethylene-bis-3-(3,5-di-tert-butyl-4-hydroxyphenyl)-propionamide, bis-(3,3-bis-(4'-hydroxy-3'-tert-butylphenyl)-butanoic acid)-glycol ester, 2,1'-thioethylbis-(3-(3,5-di-tert-butyl-4-hydroxyphenyl)-propionate, 4,4'-butylidene-bis-(3-methyl-6-tertbutylphenol), triethyleneglycol-3-(3-tert-butyl-4-hydroxy-5-methylphenyl)-propionate, octadecyl-3-(3,5-di-tert-butyl-4-hydroxyphenyl)propionate, 1,3,5-trimethyl-2,4,6-tris(3,5-di-tert-butyl-4-hydroxybenzyl)benzene or mixtures of two or more thereof,
• stabilisers from the group of phosphites and phosphonites, in particular triphenylphosphite, diphenylalkylphosphite, phenyldialkylphosphite, tris(nonylphenyl)phosphite, trilaurylphosphite, trioctadecylphosphite, distearylpentaerythritoldiphosphite, tris(2,4-di-tert-butylphenyl)phosphite, diisodecylpentaerythritoldiphosphite, bis(2,4-di-tert-butylphenyl)pentaerythritoldiphosphite, bis(2,6-di-tert-butyl-4-methylphenyl)-pentaerythritoldiphospite, diisodecyloxypentaerythritoldiphospite, bis(2,4-di-tert-butyl-6-methylphenyl)pentaerythritoldiphosphite, bis(2,4,6-tris-(tert-butylphenyl))pentaerythritoldiphosphite, tristearylsorbitoltriphosphite, tetrakis(2,4-di-tert-butylphenyl)-4,4'-biphenylenediphosphonite, 6-isooctyloxy-2,4,8,10-tetra-tert-butyl-12H-dibenz-[d,g]-1,3,2-dioxaphosphocine, 6-fluoro-2,4,8,10-tetra-tert-butyl-12-methyl-dibenz[d,g]-1,3,2-dioxaphosphocine, bis(2,4-di-tert-butyl-6-methylphenyl)methylphosphite and bis(2,4-di-tert-butyl-6-methylphenyl)ethylphosphite, tris[2-tert-butyl-4-thio(2'-methyl-4'-hydroxy-5'-tert-butyl)-phenyl-5-methyllphenyl-phosphite and tris(2,4-di-tert-butylphenyl)phosphite, 2,6-di-tert-butyl-4-(4,6-bis(octylthio)-1,3,5=triazian-2-ylamino)phenol, triethyleneglycol bis(3-tert-butyl-4-hydroxy-5-methylphenyl)propionate, tetrakis-methylene(3,5-di-tert-butyl-4-hydroxyhydrocinnamate)methane, 3-(3,5-di-tert-butyl-4-hydroxyphenyl)propionic acid, 2,2"-methylenebis-(6-tert-butyl-p-cresol)monoacrylate, and
• mixtures hereof.

5. Polyamide moulding compound according to the preceding claim, **characterised in that** this comprises 0.2 to 2% by weight, preferably 0.2 to 1.5% by weight of stabilisers based on secondary amines and/or 0.1 to 1.5% by weight, preferably 0.2 to 1% by weight, of stabilisers based on sterically hindered phenols and/or 0.1 to 1.5% by weight, preferably 0.2 to 1% by weight of stabilisers from the group of phosphites and phosphonites.

6. Polyamide moulding compound according to one of the preceding claims, **characterised in that** the at least one flame retardant is halogen-free, the halogen-free flame retardant being preferably selected from the group consisting of melamine cyanurate, melamine phosphate, melamine pyrophosphate, melamine polyphosphate, melem phosphate, melem pyrophosphate, dimelamine pyrophosphate, dimelamine phosphate, melon polyphosphate, phosphaphenanthrenes, metal hydroxides, phosphinic acid salts, diphosphinic acid salts and combinations hereof.

7. Polyamide moulding compound according to one of the preceding claims, **characterised in that** the flame retardant comprises in addition at least one synergist, the at least one synergist being preferably selected from the group consisting of nitrogen-containing compounds, nitrogen- and phosphorus-containing compounds, metal borates, metal carbonates, metal hydroxides, metal hydroxyoxides, metal nitrides, metal oxides, metal phosphates, metal sulphides, metal stannates, metal hydroxystannates, silicates, zeolites, basic zinc silicates, silicic acids and combinations hereof, in particular triazine derivatives, melamine, guanidine, guanidine derivatives, biuret, triuret, tartrazine, glycoluril, acetoguanamine, butyroguanamine, caprinoguanamine, benzoguanamine, melamine derivatives of cyanuric acid, melamine derivates of isocyanuric acid, melamine cyanurate, condensation products of melamine, melamine pyrophosphate, pyrophospates of the condensation products of melamine, dimelamine phosphate, dimelamine pyrophosphate, melamine polyphosphate, dicyandiamide, ammonium polyphosphate, ammonium hydrogen phosphate, ammonium dihydrogen phosphate, polyphosphates of the condensation products of melamine, melamine sulphate, allantoin, aluminium hydroxide, synthetic aluminium hydroxyoxide, such as synthetic aluminium metahydroxide, natural aluminium hydroxyoxide, such as natural aluminium metahydroxide, aluminium oxide, calcium borate, calcium carbonate, calcium magnesium carbonate, calcium oxide, calcium sulphide, iron oxide, magnesium borate, magnesium carbonate, magnesium hydroxide, magnesium nitride, magnesium oxide, magnesium sulphide, manganese hydroxide, manganese oxide, titanium nitride, titanium dioxide, zinc borate, zinc metaborate, zinc carbonate, zinc hydroxide, zinc nitride, zinc oxide, zinc phosphate, zinc sulphide, zinc stannate, zinc hydroxystannate, basic zinc silicate, tin oxide hydrate and combinations hereof.

8. Polyamide moulding compound according to one of the preceding claims, **characterised in that** the at least one flame retardant is a phosphinic acid salt of the general formula (I) 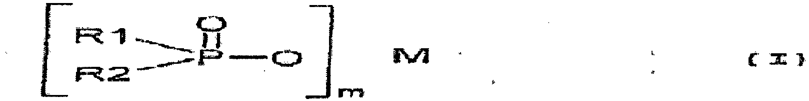 and/or formula (II) 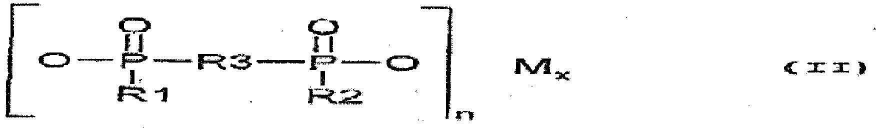 and/or one of the polymers thereof, R1 and R2 being the same or different and being selected from the group consisting of linear or branched C1-C8 alkyl and/or aryl, R3 being selected from the group consisting of linear or branched C1-C10 alkylene, C6-C10 arylene, alkylarylene and arylalkylene, M being a metal ion from the 2^{nd} or 3^{rd} main or subsidiary group of the periodic table, preferably Al, Ba, Ca or Zn, m being 2 or 3, n 1 or 3, and x 1 or 2.

9. Polyamide moulding compound according to one of the preceding claims, **characterised in that** 5 to 24% by weight, preferably 6 to 23% by weight, particularly preferred 7 to 21% by weight, of the at least one flame retardant is contained in the polyamide moulding compound.

10. Polyamide moulding compound according to one of the preceding claims, **characterised in that** the at least one additive is selected from the group consisting of
• light stabilisers, UV stabilisers, UV absorbers or UV blockers,
• lubricants,
• colourants,
• nucleation agents,
• antistatic agents, in particular selected from the group consisting of carbon black, carbon nanotubes or mixtures hereof
• conductivity additives,
• mould-release agents,
• fillers, in particular selected from the group consisting of whiskers, talcum, mica, silicates, quartz, titanium dioxide, wollastonite, kaolin, silicic acids, magnesium carbonate, magnesium hydroxide, chalk, ground or precipitated calcium carbonate, lime, field spar, barium sulphate, glass balls, hollow glass balls, hollow-ball silicate fillers, natural layer silicates, synthetic layer silicates and mixtures hereof,
• reinforcing agents,
• optical brighteners or
• mixtures hereof.

11. Polyamide moulding compound according to the preceding claim, **characterised in that** fibres are contained as reinforcing agents, in particular glass fibres and/or carbon fibres.

12. Polyamide moulding compound according to the preceding claim, **characterised in that** the fibres concern fibres with a circular cross-sectional area, fibres with a non-circular cross-sectional area or a mixture of fibres with a circular cross-sectional area and fibres with a non-circular cross-sectional area, the proportion of fibres with a non-circular cross-sectional area in the mixture preferably being at least 50% by weight and, in the case of the fibres with the non-circular cross-sectional area, the dimensional ratio of the main cross-sectional axis to the subsidiary cross-sectional axis being preferably > 2, particularly preferred in the range of 2 to 8, very particularly preferred in the range of 3 to 5.

13. Polyamide moulding compound according to one of the claims 11 or 12, **characterised in that** the fibres are short fibres, preferably with a length in the range of 2 to 50 mm and a diameter of 5 to 40 µm, and/or endless fibres.

14. Polyamide moulding compound according to one of the preceding claims, **characterised in that** this is free of metallic pigments.

15. Moulded article produced from a polyamide moulding compound according to one of the preceding claims, preferably in the form of a component for the automobile or electrical/electronic field, in particular cylinder head covers, engine covers, housings for charge coolers, charge cooler flaps, intake pipes, intake manifolds, connectors, gearwheels, fan impellers, cooling water boxes, housings or housing parts for heat exchangers, coolant coolers, charge coolers, thermostat, water pump, heating body, attachment parts, in the form of an electrical or electronic component, parts of jump start assistance points, a circuit board, a part of a circuit board, a housing component, a foil, a pipe, in particular in the form of a switch, a distributor, a relay, a resistor, a capacitor, a coil, a lamp, a diode, an LED, a transistor, a connector, a regulator, a store and/or a sensor, components which are at least partially in contact with a metal being preferred.

## Revendications

1. Mélange à mouler de polyamides, consistant
a) 22 à 99,99 % en poids d'un mélange de polyamides consistant en
(A1) au moins un polyamide partiellement cristallin, partiellement aromatique, ayant un point de fusion compris dans la plage de 255 à 330°C,
(A2) au moins un polyamide contenant du caprolactame, différent du polyamide (A1) partiellement cristallin, partiellement aromatique, ayant une teneur en caprolactame d'au moins 50 % en poids,
la teneur totale en caprolactame du caprolactame contenu dans le polyamide (A1) et dans le polyamide (A2) étant, par rapport au mélange de polyamides, de 3 à 35 % en poids,
b) 0 à 25 % en poids d'au moins un agent retardateur de flamme,
c) 0,01 à 3,0 % en poids d'au moins un stabilisant thermique organique, et
d) 0 à 50 % en poids d'au moins un additif,
les composants a) à d) se complétant à un total de 100 % en poids,
**caractérisé en ce que** le mélange à mouler de polyamides est exempt de sels métalliques et d'oxydes métalliques d'un métal de transition du Groupe VB, VIB, VIIB ou VIIIB du système périodique.

2. Mélange à mouler de polyamides selon la revendication précédente, **caractérisé en ce que** la conductivité électrique du mélange à mouler est de 1*10⁻⁶ à 0,5*10⁻¹¹S, de préférence de 1*10⁻⁸ à 8*10⁻¹⁰S et d'une manière particulièrement préférée de 3*10⁻⁹ à 3*10⁻¹⁰S.

3. Mélange à mouler de polyamides selon l'une des revendications précédentes, **caractérisé en ce que** le mélange à mouler de polyamides est exempt de stabilisants inorganiques à base de métaux de transition et de métaux des groupes principaux III à V.

4. Mélange à mouler de polyamides selon l'une des revendications précédentes, **caractérisé en ce que** l'au moins un stabilisant thermique organique est choisi dans le groupe consistant en
- les stabilisants à base d'amines aromatiques secondaires, en particulier les adduits de phénylènediamine et d'acétone, les adduits de phénylènediamine et de linolène, la N,N'-dinaphtyl-p-phénylènediamine, la N-phényl-N'-cyclohexyl-p-phénylènediamine ou les mélanges d'au moins deux d'entre eux,
- les stabilisants à base de phénols à empêchement stérique, en particulier le N,N'-hexaméthylène-bis-3-(3,5-di-tert-butyl-4-hydroxyphényl)-propionamide, l'ester du glycol de l'acide bis(3,3-bis(4'-hydroxy-3'-tert-butylphényl)-butanoïque), le bis(3-(3,5-di-tert-butyl-4-hydroxyphényl)propionate de 2,1'-thioéthyle, le 4,4'-buylidène-bis(3-méthyl-6-tert-butylphénol), le 3-(3-tert-butyl-4-hydroxy-5-méthylphényl)-propionate de triéthylèneglycol, le 3-(3,5-di-tert-butyl-4-hydroxyphényl)propionate d'octadécyle, le 1,3,5-triméthyl-2,4,6-tris(3,5-di-tert-butyl-4-hydroxybenzyl)benzène, ou les mélanges d'au moins deux d'entre eux,
- les stabilisants du groupe des phosphites et des phosphonites, en particulier le phosphite de triphényle, le phosphite de diphénylalkyle, le phosphite de phényldialkyle, le phosphite de tris(nonylphényle), le phosphite de trilauryle, le phosphite de trioctadécyle, le diphosphite de distéarylpentaérythritol, le phosphite de tris(2,4-di-tert-butylphényle), le diphosphite de düsodécylpentaérythritol, le diphosphite de bis(2,4-di-tert-butylphényl)pentaérythritol, le diphosphite de bis(2,6-di-tert-butyl-4-méthylphényl)-pentaérythritol, le diphosphite de düsodécyloxypentaérythritol, le diphosphite de bis(2,4-di-tert-butyl-6-méthylphényl)pentaérythritol, le diphosphite de bis(2,4,6-tris(tert-butylphényl)pentaérythritol, le triphosphite de tristéarylsorbitol, le diphosphonite de trétrakis(2,4-di-tert-butylphényl)-4,4'-biphénylène, la 6-isooctyloxy-2,4,8,10-tétra-tert-butyl-12H-dibenzo[d,g]1,3,2-dioxaphosphocine, la 6-fluoro-2,4,8,10-tétra-tert-butyl-12-méthyl-dibenzo[d,g]1,3,2-dioxaphosphocine, le phosphite de bis(2,4-di-tert-butyl-6-méthylphényl)-méthyle et le phosphite de bis(2,4-di-tert-butyl-6-méthylphényl)éthyle, le phosphite de tris[2-tert-butyl-4-thio(2'-méthyl-4'-hydroxy-5'-tert-butyl)-phényl-5-méthyl]phényle et le phosphite de tris(2,4-di-tert-butylphényle), le 2,6-di-tert-butyl-4-(4,6-bis(octylthio)-1,3,5-triazan-2-ylamino)phénol, le bis(3-tert-butyl-4-hydroxy-5-méthylphényl)propionate de triéthylèneglycol, le tétrakis-méthylène(3,5-di-tert-butyl-4-hydroxyhydrocinnamate)méthane, l'acide 3-(3,5-di-tert-butyl-4-hydroxyphényl)propionique, le monoacrylate de 2,2"-méthylènebis(6-tert-butyl-p-crésol) ainsi que
- les mélanges de ceux-ci.

5. Mélange à mouler de polyamides selon la revendication précédente, **caractérisé en ce qu'**il contient 0,2 à 2 % en poids, de préférence 0,2 à 1,5 % en poids de stabilisants à base d'amines secondaires et/ou 0,1 à 1,5 % en poids, de préférence 0,2 à 1 % en poids de stabilisants à base de phénols à empêchement stérique et/ou 0,1 à 1,5 % en poids, de préférence 0,2 à 1 % en poids de stabilisants du groupe des phosphites et des phosphonites.

6. Mélange à mouler de polyamides selon l'une des revendications précédentes, **caractérisé en ce que** l'au moins un agent retardateur de flamme est non halogéné, l'agent retardateur de flamme non halogéné étant choisi de préférence dans le groupe consistant en le cyanurate de mélamine, le phosphate de mélamine, le pyrophosphate de mélamine, le polyphosphate de mélamine, le phosphate de mélem, le pyrophosphate de mélem, le pyrophosphate de dimélamine, le phosphate de dimélamine, le polyphosphate de mélon, les phosphaphénanthrènes, les hydroxydes métalliques, les sels de l'acide phosphinique, les sels de l'acide diphosphinique et les combinaisons de ceux-ci.

7. Mélange à mouler de polyamides selon l'une des revendications précédentes, **caractérisé en ce que** l'agent retardateur de flamme contient en outre un synergiste, l'au moins un synergiste étant choisi de préférence dans le groupe consistant en les composés azotés, les composés azotés et phosphorés, les borates métalliques, les carbonates métalliques, les hydroxydes métalliques, les hydroxyoxydes métalliques, les nitrures métalliques, les oxydes métalliques, les phosphates métalliques, les sulfures métalliques, les stannates métalliques, les hydroxystannates métalliques, les silicates, les zéolithes, les silicates basiques de zinc, les silices et les combinaisons de ceux-ci, en particulier les dérivés de la triazine, la mélamine, la guanidine, les dérivés de la guanidine, le biuret, le triuret, la tartrazine, le glycolurile, l'acétoguanamine, la butyroguanamine, la caprinoguanamine, la benzoguanamine, les dérivés de la mélamine de l'acide cyanurique, les dérivés de la mélamine de l'acide isocyanurique, le cyanurate de mélamine, les produits de condensation de la mélamine, le pyrophosphate de mélamine, les pyrophosphates des produits de condensation de la mélamine, le phosphate de dimélamine, le pyrophosphate de dimélamine, le polyphosphate de mélamine, le dicyanodiamide, le polyphosphate d'ammonium, l'hydrogénophosphate d'ammonium, le dihydrogénophosphate d'ammonium, les polyphosphates des produits de condensation de la mélamine, le sulfate de mélamine, l'allantoïne, l'hydroxyde d'aluminium, l'hydroxyoxyde d'aluminium synthétique, tel que le métahydroxyde d'aluminium, l'hydroxyoxyde d'aluminium naturel, tel que le métahydroxyde d'aluminium naturel, l'oxyde d'aluminium, le borate de calcium, le carbonate de calcium, le carbonate de calcium et de magnésium, l'oxyde de calcium, le sulfure de calcium, l'oxyde de fer, le borate de magnésium, le carbonate de magnésium, l'hydroxyde de magnésium, le nitrure de magnésium, l'oxyde de magnésium, le sulfure de magnésium, l'hydroxyde de manganèse, l'oxyde de manganèse, le nitrure de titane, le dioxyde de titane, le borate de zinc, le métaborate de zinc, le carbonate de zinc, l'hydroxyde de zinc, le nitrure de zinc, l'oxyde de zinc, le phosphate de zinc, le sulfure de zinc, le stannate de zinc, l'hydroxystannate de zinc, le silicate basique de zinc, l'oxyde d'étain hydraté et les combinaisons de ceux-ci.

8. Mélange à mouler de polyamides selon l'une des revendications précédentes, **caractérisé en ce que** l'au moins un agent retardateur de flamme est un sel de l'acide phosphinique de formule générale (I) 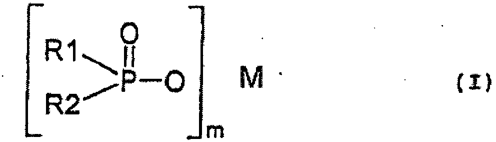 et/ou de formule (II) 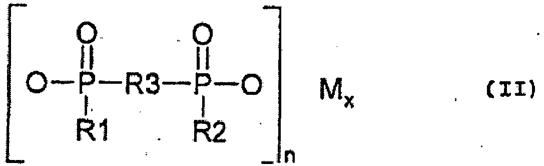 et/ou l'un de leurs polymères, R1 et R2 étant identiques ou différents et étant choisis dans le groupe consistant en les groupes alkyle à C1-C8 à chaîne droite ou ramifiée et/ou aryle, R3 est choisi dans le groupe consistant en les groupes alkylène en C1-C10 à chaîne droite ou ramifiée, arylène en C6-C10, alkylarylène et arylalkylène, M est un ion métallique du deuxième ou du troisième groupe principal ou groupe secondaire du système périodique, de préférence Al, Ba, Ca ou Zn, m vaut 2 ou 3, n vaut 1 ou 3, et x vaut 1 ou 2.

9. Mélange à mouler de polyamides selon l'une des revendications précédentes, **caractérisé en ce que** le mélange à mouler de polyamides contient 5 à 24 % en poids, de préférence 6 à 23 % en poids, d'une manière particulièrement préférée 7 à 21 % en poids de l'au moins un agent retardateur de flamme.

10. Mélange à mouler de polyamides selon l'une des revendications précédentes, **caractérisé en ce que** l'au moins un additif est choisi dans le groupe consistant en
- les agents de protection contre la lumière, les stabilisants UV, les absorbants UV ou les agents bloquant les UV,
- les lubrifiants,
- les colorants,
- les agents de nucléation,
- les antistatiques, choisis en particulier dans le groupe consistant en le noir de carbone, les nanotubes de carbone ou les mélanges de ceux-ci,
- les additifs de conductivité,
- les agents de démoulage,
- les matières de charge, choisies en particulier dans le groupe consistant en les trichines, le talc, le mica, les silicates, le quartz, le dioxyde de titane, la wollastonite, le kaolin, les silices, le carbonate de magnésium, l'hydroxyde de magnésium, la craie, le carbonate de calcium broyé ou précipité, la chaux, le feldspath, le sulfate de baryum, les billes de verre, les billes de verre creuses, les charges silicatées en billes creuses, les phyllosilicates naturels, les phyllosilicates synthétiques et les mélanges de ceux-ci,
- les agents de renfort,
- les azurants optiques ou
- les mélanges de ceux-ci.

11. Mélange à mouler de polyamides selon la revendication précédente, **caractérisé en ce qu'**il contient en tant qu'agent de renfort des fibres, en particulier des fibres de verre et/ou des fibres de carbone.

12. Mélange à mouler de polyamides selon la revendication précédente, **caractérisé en ce que**, pour ce qui concerne les fibres, il s'agit de fibres ayant une section transversale circulaire, de fibres ayant une section transversale non circulaire, ou d'un mélange de fibres ayant une section transversale circulaire et de fibres ayant une section transversale non circulaire, la proportion de fibres ayant une section transversale non circulaire étant dans le mélange de préférence au minimum de 50 % en poids et, dans le cas des fibres ayant une section transversale non circulaire, le rapport entre la longueur de l'axe principal de la section transversale et celle de l'axe secondaire de la section transversale étant de préférence > 2, d'une manière particulièrement préférée compris dans la plage de 2 à 8, d'une manière tout particulièrement préférée dans la plage de 3 à 5.

13. Mélange à mouler de polyamides selon l'une des revendications 11 ou 12, **caractérisé en ce que** les fibres sont des fibres courtes, de préférence avec une longueur comprise dans la plage de 2 à 50 mm et un diamètre de 5 à 40 µm, et/ou des fibres continues.

14. Mélange à mouler de polyamides selon l'une des revendications précédentes, **caractérisé en ce qu'**il est exempt de pigments métalliques.

15. Objet moulé, fabriqué à partir d'un mélange à mouler de polyamides selon l'une des revendications précédentes, de préférence sous forme d'un composant pour le secteur de l'automobile ou de l'électricité/électronique, en particulier pour des couvre-culasses, des capots moteur, des carters pour refroidisseurs d'air d'alimentation, des volets de refroidisseurs d'air d'alimentation, des tubulures d'admission, des collecteurs d'admission, des connecteurs, des roues dentées, des roues de ventilateur, des réservoirs d'eau de refroidissement, des carters ou parties de carters pour des échangeurs de chaleur, des refroidisseurs de réfrigérant, des refroidisseurs d'air de suralimentation, un thermostat, une pompe à eau, des radiateurs, des pièces de fixation, sous forme d'un composant électrique ou électronique, des parties de points d'appui de démarrage externe, d'une carte conductrice, une partie d'une plaque conductrice, d'un constituant de carter, d'une feuille, d'une conduite, en particulier sous forme d'un interrupteur, d'un répartiteur, d'un relais, d'une résistance, d'un condensateur, d'une bobine, d'une lampe, d'une diode, d'un LED, d'un transistor, d'un connecteur, d'un régulateur, d'une mémoire et/ou d'un capteur, les composants qui au moins partiellement sont en contact avec un métal étant préférés.
